# EUROPÄISCHE PATENTANMELDUNG

(11) **EP 1 752 763 A1**
(43) Veröffentlichungstag der Anmeldung: **14.02.2007**
(21) Anmeldenummer: 05107332.8
(22) Anmeldetag: 10.08.2005
(51) Int. Cl.: G01N 27/28

(54) **Wechselarmatur**

(71) Anmelder: Mettler-Toledo AG, 8606 Greifensee (CH)
(72) Erfinder: Tottewitz, Michael, 76689, Karlsdorf-Neuthard (DE); Caderas, Daniel, 8235, Lohn (CH)

(57) **Zusammenfassung**

Wechselarmatur mit einem Gehäuse (2), einem im Gehäuse (2) zwischen einer Ruheposition und einer Messposition axial verschiebbaren Tauchrohr (3), einer herausnehmbar im Tauchrohr (3) anordnenbaren Messsonde, und einem in einem Antriebsgehäuse (17, 26) angeordneten Antrieb, welcher ein mit dem Tauchrohr (3) koppelbares Antriebselement (4) aufweist, dadurch gekennzeichnet, dass sich das Tauchrohr (3) und/oder eine gegebenenfalls im Tauchrohr (3) angeordnete Messsonde stets ausserhalb des Antriebsgehäuses (17, 26) befinden.

## Beschreibung

Die Erfindung betrifft eine Wechselarmatur.

Wechselarmaturen dienen dazu, eine meist standardisierte Messsonde auf einfache Weise in einen beispielsweise chemischen, pharmazeutischen oder biologischen Prozess bzw. ein Behältnis in dem ein solcher Prozess abläuft einzubringen und/oder aus diesem zu entfernen. Es kann notwendig sein, eine Messsonde aus einem Prozess zu entfernen, um beispielsweise eine defekte Messsonde auszutauschen oder diese zu schützen zum Beispiel, wenn die Prozessanlage gereinigt wird. Bekannte Wechselarmaturen sind daher häufig mit einer Behandlungskammer versehen, in der die Messsonde getrennt von der Prozessanlage unter anderem gereinigt, einem Funktionstest und/oder einer Kalibrierung unterzogen werden kann. Wechselarmaturen werden beispielsweise zusammen mit unterschiedlichen Messsonden eingesetzt, unter anderem mit pH-Sonden, Leitfähigkeitssonden, ionensensitiven Sonden, Trübungsmesssonden oder Gassonden.

Die bekannten Wechselarmaturen sind im Wesentlichen zylindrisch ausgestaltet. Eine Messsonde wird vom dem Messmedium abgewandten Ende in die Wechselarmatur eingeführt, so dass dort ein mit der Messsonde verbundenes Kabel aus der Wechselarmatur herausragt. Bei einem Austausch der Messsonde kann es passieren, dass diese einfach am Kabel aus der Wechselarmatur herausgezogen wird, wodurch dann das Kabel unter Umständen gewaltsam von der Messsonde getrennt werden kann. Zudem kann auch während des Betriebs der Wechselarmatur ein Zug auf dem Kabel lasten, welcher die Verbindung zwischen Kabel und Messsonde schwächen kann.

Aufgrund des Einsatzes von Wechselarmaturen in chemischen Prozessen müssen diese sehr sicher gestaltet sein, so dass ein versehentliches Entfernen der Messsonde aus der Wechselarmatur vermieden wird.

In der EP 0 882 896 A1 wird eine Wechselarmatur mit einer herausnehmbar in einem Tauchrohr angeordneten Messsonde offenbart. Das Tauchrohr ist zwischen einer Ruheposition und einer Messposition axial verschiebbar in einem Gehäuse angeordnet. Zwischen dem Tauchrohr und der darin angeordneten Messsonde ist mindestens eine Dichtung angeordnet, welche das Tauchrohrs zum Medium hin abdichtet. Diese Wechselarmatur weist ein Sperrelement auf, welches ein axiales Verschieben des Tauchrohrs ohne eingesetzte Messsonde verhindert.

Eine Wechselarmatur mit einer Behandlungskammer und einem Sperrelement gegen das versehentliche Entfernen der Messsonde wird in der DE 102 41 833 A1 offenbart. Diese Wechselarmatur ist ebenfalls derart gestaltet, dass die Messsonde vom dem Messmedium entgegengesetzten Ende der Wechselarmatur in das in der Wechselarmatur befindliche Tauchrohr eingebracht wird. Das Tauchrohr weist als Sperrelement einen fixierbaren Einsatz auf, mit dem die Messsonde gegen einen gegen das Messmedium hin gerichteten Anschlag im Tauchrohr gepresst wird.

Trotz der bekannten Sicherheitseinrichtungen wäre es prinzipiell durchaus möglich, die Messsonde mit roher Gewalt aus der Wechselarmatur zu ziehen, auch wenn sich das Tauchrohr in der Messposition befindet. Dies hätte zur Folge, dass das Messmedium in die Wechselarmatur gelangen und auch aus ihr austreten könnte, was vor allem bei aggressiven und/oder giftigen Medien unter allen Umständen vermieden werden muss.

Bekannte Wechselarmaturen weisen ein in einem Gehäuse axial verschiebares Tauchrohr auf, in dem die Messsonde angeordnet werden kann. Dieses Tauchrohr ist zumindest der Länge der Messsonde angepasst. Die Länge des Tauchrohrs bedingt häufig die maximale Aufbauhöhe der Wechselarmatur, also die Höhe der Wechselarmatur ausserhalb des Behältnisses. Vor allem kann bei der Verwendung langer Sensoren das Tauchrohr in der Ruheposition am dem Medium abgewandten Ende aus der Wechselarmatur bzw. deren Gehäuse herausragen. Bei einem Wechsel von der Ruheposition in eine Messposition wird das Tauchrohr zusammen mit der darin angeordneten Messsonde im Gehäuse axial in Richtung des Messmediums verschoben. Die Einbauhöhe der bekannten Wechselarmaturen variiert somit je nach Verschiebungsposition des Tauchrohrs und der darin anordnenbaren Messsonde. Die Einbauhöhe muss vor allem bei der Konstruktion von Prozessanlagen beachtet werden, damit genug Platz zum Ausbau der Messsonde aus der Wechselarmatur vorhanden ist. Die Wechselarmatur sollte vorzugsweise derart in die Anlage integriert werden, dass sie zwar leicht zugänglich ist, aber die Veränderung der Aufbauhöhe beim Wechsel der Verschiebungsposition keine Gefahr für Teile der Prozessanlage, nah angeordnete Gegenstände oder sogar für sich in der Nähe aufhaltende Personen darstellt.

Als Aufgabe ergibt sich damit die Konstruktion einer verbesserten und besonders sicheren Wechselarmatur, welche die angeführten Nachteile überwindet.

Gelöst wird diese Aufgabe durch eine Wechselarmatur für eine Messsonde nach Anspruch 1.

Eine Wechselarmatur weist ein Gehäuse, ein in diesem Gehäuse zwischen einer Ruheposition und einer Messposition axial verschiebbares Tauchrohr, eine herausnehmbar im Tauchrohr anordnenbare Messsonde, und einem in einem Antriebsgehäuse angeordneten Antrieb auf, welcher ein mit dem Tauchrohr koppelbares Antriebselement aufweist, wobei sich das Tauchrohr und eine gegebenenfalls im Tauchrohr angeordnete Messsonde stets ausserhalb des Antriebsgehäuses befinden.

Die lösbare Verbindung zwischen dem Antrieb und dem Tauchrohr ist besonders vorteilhaft, da so ein nahezu gekapselter in einem Antriebsgehäuse angeordneter Antrieb verwendet werden kann. Weder der Antrieb noch das Antriebsgehäuse weisen noch eine durchgängige Aussparung für das Tauchrohr und/oder die gegebenenfalls im Tauchrohr angeordnete Messsonde auf. Der Antrieb und das Antriebselement können von der Wechselarmatur getrennt werden und ermöglichen so einen einfachen und sicheren Austausch einer gegebenenfalls im Tauchrohr befindlichen Messsonde, ohne dass diese durch den Antrieb hindurch bewegt werden muss. Die Messsonde ist in der Wechselarmatur anordnenbar, so dass eine Messsonde aus der Armatur entfernt bzw. in diese eingesetzt oder auch gegen eine andere Messsonde ausgetauscht werden kann.

Vorteilhaft ist eine Ausgestaltung der Wechselarmatur, bei der das Antriebsgehäuse frei von Durchführungen für Leitungen von und/oder zur Messsonde ist. Sämtliche Leitung zur oder von der Messsonde weg, können seitlich aus der Wechselarmatur hinausgeführt werden, so dass nur das Antriebselement direkt mit dem Antrieb verbunden ist. Unter Leitung sind hier vor allem Kabel zu verstehen, welche entweder Energie und/oder Daten zur Messsonde hin bzw. von dieser weg zu einer geeigneten Auswerte- und/oder Steuereinheit oder einer Leitstelle übertragen.

Zwischen dem Gehäuse und dem den Antrieb aufweisenden Antriebsgehäuse ist ein Gehäuseaufsatz angeordnet, welcher lösbar mit dem Gehäuse verbunden ist und das Antriebselement aufnimmt. Der Gehäuseaufsatz schafft eine räumliche Trennung von Antrieb und Gehäuse und ermöglicht zusammen mit dem Antriebselement eine Wärmeentkopplung zwischen Antrieb und Gehäuse. Dies ist besonders vorteilhaft, da eine Wärmeentwicklung im Antriebsgehäuse weder das Gehäuse, noch das im Gehäuse angeordnete Tauchrohr oder die im Tauchrohr anordnenbare Messsonde beeinflussen kann.

Der Gehäuseaufsatz ist lösbar mit dem Gehäuse und vorzugsweise fest mit dem Antriebsgehäuse verbunden. Zum Austausch der herausnehmbar im Tauchrohr anordnenbaren Messsonde kann das Antriebsgehäuse zusammen mit dem Antriebselement und dem Gehäuseaufsatz vollständig vom Gehäuse entfernt oder auch nur in Relation zum Gehäuse verschoben und/oder geöffnet werden, so dass eine Öffnung des Tauchrohrs direkt zugänglich ist und eine Messsonde leicht in das Tauchrohr eingesetzt oder aus diesem entnommen werden kann.

Die Anordnung des Gehäuseaufsatzes zwischen dem Antriebsgehäuse und dem Gehäuse ist besonders vorteilhaft, da eine derartig ausgestaltete Wechselarmatur eine feste Aufbauhöhe aufweist. Ein Wechsel der Verschiebungsposition des Tauchrohrs verändert die Aufbauhöhe der Wechselarmatur nicht.

In einem bevorzugten Ausführungsbeispiel ist im Gehäuse eine Behandlungskammer für die im Tauchrohr anordnenbare Messsonde angeordnet. Die Behandlungskammer ist derart ausgestaltet, dass eine im Tauchrohr angeordnete Messsonde in der Ruheposition gereinigt, kalibriert und/oder einem Funktionstest unterzogen werden kann, je nach Art der eingesetzten Messsonde.

Die Behandlungskammer weist daher mindestens einen Anschlussstutzen auf, über den je nach Anwendung und Messsonde verschiedene, bekannte Reinigungs- und Kalibrierlösungen sowie auch verschiedene Gase geleitet oder Vakuum gezogen werden kann. Gerade bei der Verwendung von Flüssigkeiten und Gasen als Behandlungsmedien bietet es sich an, dass die Behandlungskammer mehr als einen Anschlussstutzen aufweist. Die Behandlungsmedien können über denselben oder mindestens einen weiteren Anschlussstutzen wieder aus der Behandlungskammer entfernt werden.

Das Antriebselement ist vorzugsweise stangen- oder hülsenartig, sowie axial verschiebbar ausgestaltet und ist mit dem Antrieb verbunden. An seinem dem Messmedium zugewandten Ende weist das Antriebselement eine Aussparung auf, welche den Sensorkopf, also den dem Messmedium abgewandten Teil der Messsonde, aufnehmen und auch als Führung für ein am Sensorkopf befestigtes Kabel dienen kann. Die Ausgestaltung als Kabelführung ist nur für Messsonden relevant, bei denen der Daten- und/oder Energieaustausch über ein Kabel und nicht drahtlos geschieht. Aufgrund der Ausgestaltung des Antriebselements wird das Kabel seitlich aus der Wechselarmatur herausgeführt und ist somit immer Zug entlastet. Beim Ein- oder Ausbau der Messsonde kann diese am Sensorkopf gehalten werden, ohne Zug auf das Kabel auszuüben.

Das Antriebselement kann an das Tauchrohr angekoppelt und mit diesem zusammen durch den Antrieb aus der Ruheposition in die Messposition bewegt werden. Das Antriebselement ist so ausgestaltet, dass es den Sensorkopf aufnehmen kann. In der Ruheposition befindet sich das Antriebselement im Gehäuseaufsatz und im Antriebsgehäuse, in der Messposition ist das Antriebselement zum Messmedium hin verschoben und befindet sich dann im Wesentlichen im Gehäuseaufsatz und dem daran angrenzenden Gehäuse.

Das Antriebselement und der dieses aufweisende Gehäuseaufsatz sind derart gestaltet, dass die Messsonde nur in der Ruheposition bei geöffnetem Gehäuseaufsatz und getrennter Verbindung zwischen Tauchrohr und Antriebselement aus der Wechselarmatur entfernbar oder einsetzbar ist. Der Gehäuseaufsatz kann zusammen mit dem Antriebgehäuse und dem Antriebselement vollständig vom Gehäuse entfernt werden. Vorzugsweise ist der Gehäuseaufsatz jedoch um eine azentrisch angeordnete Achse schwenkbar mit dem Gehäuse verbunden.

In vorteilhafter Weise ist der Gehäuseaufsatz nur an einem Angelpunkt mit dem Gehäuse verbunden und weitestgehend geschlossen ausgestaltet, wobei der Gehäuseaufsatz vorzugsweise mindestens eine Durchführung für ein gegebenenfalls mit der Messsonde verbundenes Kabel aufweist. Die Messsonde kann somit nicht aus der Wechselarmatur entfernt werden, wenn Gehäuseaufsatz und Gehäuse geschlossen sind. Ein weiterer Vorteil des weitestgehend geschlossenen Gehäuseaufsatzes besteht darin, dass so ein Eindringen von Flüssigkeiten und/oder Stäuben in die Wechselarmatur von aussen vermieden werden kann.

Ein versehentliches Entfernen der Messsonde aus dem Tauchrohr wird bereits durch die Ausgestaltung des Antriebelements und des Gehäuseaufsatzes verhindert. Zusätzlich kann die Wechselarmatur mindestens ein Sicherheitselement aufweisen. Das mindestens eine Sicherheitselement verhindert eine axiale Verschiebung des Tauchrohrs, wenn sich im Tauchrohr keine Messsonde befindet und/oder der Gehäuseaufsatz geöffnet ist und/oder keine korrekte Verbindung zwischen dem Tauchrohr und dem Antriebselement besteht. Ein oder mehrere Sicherheitselemente können an verschiedenen Positionen in der Wechselarmatur angeordnet sein.

Ein Sicherheitselement kann auch dazu dienen, die Freigabe der mindestens einen Zuführung zur Behandlungskammer zu steuern, damit die Behandlungskammer nur dann verwendet werden kann, wenn eine Messsonde im Tauchrohr ist und sich dieses in der Ruheposition befindet.

Das mindestens eine Sicherheitselement kann als mechanisches und/oder elektronisches Sperrelement ausgebildet sein. Ein mechanisches Sperrelement kann beispielsweise ein Bolzen sein, welcher in eine Aussparung im Tauchrohr eingreift und so eine axiale Bewegung des Tauchrohrs verhindert. Ein Sperrelement kann aber auch elektrische ausgebildet sein, so dass beispielsweise bei fehlendem Kontakt zwischen zwei Elementen der Antrieb blockiert wird.

Prozessanlagen werden im Allgemeinen über eine zentrale Kontroll- und/oder Leitstelle gesteuert und kontrolliert. Eine Prozessanlage kann ein oder mehrere Wechselarmaturen aufweisen. In diesem Fall bietet es sich an, das mindestens eine Sicherheitselement als elektronischen Sensor auszugestalten, welcher wie das elektronische Sperrelement den Antrieb steuern und/oder ein Signal an die Leitstelle senden kann, so dass dort eine Meldung über den Zustand einer bestimmten Wechselarmatur erscheint. Dies ist besonders vorteilhaft und anwenderfreundlich, da gleichzeitig mehrere Wechselarmaturen von einer zentralen Stelle aus überwacht und fehlerhafte Armaturen zum Beispiel gezielt erkannt werden können.

Damit kein Messmedium in die Wechselarmatur gelangen kann, weist das Tauchrohr und/oder das Gehäuse mindestens eine Dichtung auf, welche die Behandlungskammer in der Messposition gegen das Messmedium hin und/oder in der Ruheposition sowohl gegen das Messmedium als auch gegen die Umgebung hin abdichtet.

Ein bevorzugtes Ausführungsbeispiel weist mindestens eine weitere am Tauchrohr und/oder am Gehäuse angeordnete Dichtung auf, welche in der Ruhestellung eine Abdichtung der Behandlungskammer sowohl gegen das Messmedium als auch gegen das Antriebselement bzw. den das Antriebselement aufweisenden Gehäuseaufsatz gewährleistet.

Der Antrieb sowie das diesen aufweisende Antriebsgehäuse der Wechselarmatur können entweder gerade oder gewinkelt ausgebildet sein. Die Verwendung eines gewinkelten Antriebs bietet sich beispielsweise an Stellen in einer industriellen Anlage mit beengten räumlichen Verhältnissen an.

Der Antrieb für eine Wechselarmatur sollte möglichst klein aber gleichzeitig sehr robust sein. Der Antrieb kann als pneumatischer, elektrischer oder winkelelektrischer Antrieb ausgebildet sein, wobei ein pneumatischer Antrieb bevorzugt wird. Ebenso kann die Wechselarmatur manuell betätigt werden.

Verschiedene Ausführungsbeispiele für eine Wechselarmatur werden im Folgenden anhand der Figuren genauer beschrieben. Es zeigen:
- Fig. 1: Eine Teildarstellung einer Wechselarmatur mit einer Behandlungskammer und einer Messsonde in der Messposition im Schnitt;
- Fig. 2: eine Teildarstellung einer Wechselarmatur mit einer Behandlungskammer und einer Messsonde in der Ruheposition im Schnitt;
- Fig. 3: eine perspektivische Darstellung einer Wechselarmatur ohne Behandlungskammer und mit einem abgekoppelten, gewinkeltem Antrieb;
- Fig. 4: eine perspektivische Darstellung einer Wechselarmatur mit einer Behandlungskammer und einer Messsonde in der Ruheposition;
- Fig. 5: eine perspektivische Darstellung einer Wechselarmatur mit einer Behandlungskammer und einer Messsonde in der Messposition.

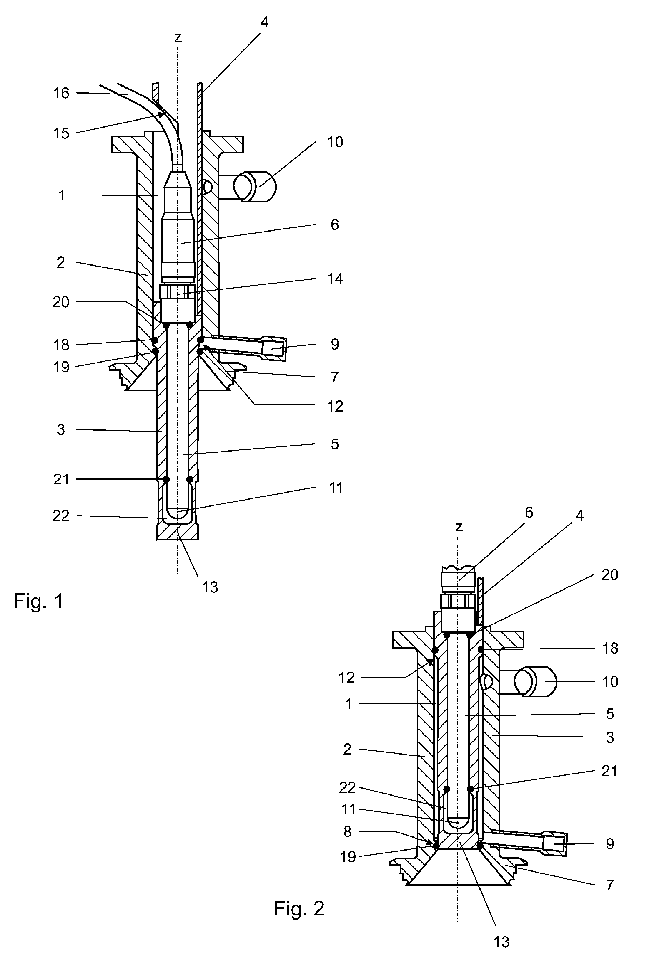

Eine Teildarstellung einer Wechselarmatur mit einer Behandlungskammer und einer Messsonde ist in Figur 1 in der Messposition und in Figur 2 in der Ruheposition gezeigt. Die beiden Figuren werden im Folgenden weitestgehend gemeinsam beschrieben.

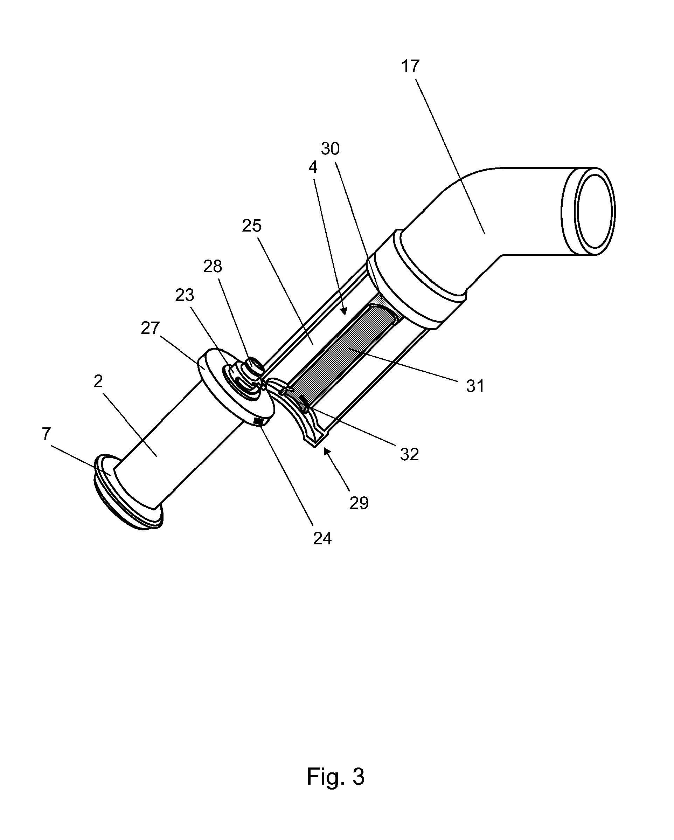

Die Wechselarmatur weist ein eine Behandlungskammer 1 umfassendes Gehäuse 2 mit einem darin axial verschiebbaren Tauchrohr 3, einem lösbar mit dem Tauchrohr 3 verbundenen Antriebselement 4 und einer im Tauchrohr 3 und dem Antriebselement 4 angeordneten Messsonde auf. Die Messsonde weist einen Sensor 5 und einen Sensorkopf 6 auf. Der bezogen auf die Zeichnung obere, hier nicht dargestellte Teil der Wechselarmatur, welcher unter anderem den Antrieb aufweist, ist in den Figuren 3 bis 5 genauer gezeigt.

Das Gehäuse 2 weist an seinem dem Messmedium zugewandten Ende einen Flansch 7 auf, welcher eine Verbindung der Wechselarmatur mit einem beliebigen Behältnis, wie zum Beispiel einer Rohrleitung oder einem Reaktionsgefäss, ermöglicht. Die Ausgestaltung des Flansches 7 ist unter anderem vom Einsatzgebiet abhängig. Der Flansch 7 kann sowohl ein standardisierter Prozessflansch oder Prozessanschluss als auch ein spezieller, beispielsweise auf Kundenwunsch angefertigter Flansch sein. Derartige Flansche oder Anschlüsse für verschiedenste Reaktionsbehältnisse und Prozessanlagen sind allgemein bekannt und werden daher nicht näher ausgeführt.

Im Inneren des Gehäuses 2 dehnt sich axial entlang der gestrichelt eingezeichneten z-Achse eine durchgehende Kammer aus, welche in diesem Ausführungsbeispiel als Behandlungskammer 1 ausgestaltet ist. Im einfachsten Fall ist die Behandlungskammer 1 gegenüber der äusseren Umgebung zumindest teilweise offen, wenn die Messsonde ins Messmedium eingefahren ist und sich die Wechselarmatur in der Messposition befindet.

Die Behandlungskammer 1 dient dazu, den Sensor 5 und vor allem ein am dem Messmedium zugewandten Ende des Sensors 5 befindliches sensitives Element 11 mit unterschiedlichen Behandlungsmedien zu behandeln. Die Behandlungsmedien können verschiedene Flüssigkeiten oder Gase umfassen, ausserdem ist es möglich die Behandlungskammer 1 zu evakuieren, so dass der Sensor 5, vor allem das sensitive Element 11 in der Behandlungskammer 1 gereinigt und/oder die Messsonde kalibriert und/oder auf ihre Funktionsfähigkeit getestet werden kann. Zusammen mit dem Sensor 5 kann in der Behandlungskammer 1 ein grosser Teil der Aussenfläche des Tauchrohrs 3 gereinigt werden. Die Behandlungsmedien können in diesem Ausführungsbeispiel über zwei Anschlussstutzen 9, 10 am Gehäuse 2 in die Behandlungskammer 1 geleitet oder wieder aus ihr entfernt werden. Für ein möglichst gutes Behandlungsergebnis sind die Anschlussstutzen 9, 10 an entgegengesetzten Enden der Behandlungskammer 1 angeordnet.

Das Tauchrohr 3 weist im Inneren einen Hohlraum auf, dessen Durchmesser und Form dem Aussendurchmesser und der Form des Sensors 5 angepasst sind, so dass das Tauchrohr 3 zumindest den Sensor 5 aufnehmen kann. Am dem Messmedium zugewandten Ende ist das Tauchrohr 3 durchbrochen, so dass sich ein zumindest teilweise zum Messmedium hin offenen Bereich 22 ausbildet. Den Abschluss des Tauchrohrs 3 zum Messmedium hin bildet ein massiver Zapfen 13. Der Sensor 5 ist in der Messposition derart im Tauchrohr angeordnet, dass sich das sensitive Element 11 im offenen Bereich 22 befindet und direkt mit dem Messmedium in Kontakt treten kann.

Das vom Messmedium abgewandte Ende des Tauchrohrs 3 ist offen und weist einen Anschluss zur Befestigung der Messsonde auf, so dass zumindest der Sensor 5 in das Tauchrohr 3 eingeführt und die Messsonde am Tauchrohr 3 befestigt werden kann. Dieser Anschluss ist in dieser Darstellung von einer an der Messsonde angeordneten Anschlussbuchse 14, z. B. einer Überwurfmutter, verdeckt, welche an der Messsonde zwischen dem Sensor 5 und dem Sensorkopf 6 angeordnet ist. Es sind unterschiedliche Anschlüsse zur Befestigung von Messsonden bekannt, so dass diese hier nicht näher ausgeführt werden.

Das dem Messmedium abgewandte Ende des Tauchrohrs 3 weist ausserdem ein Verschlusselement (s. Figuren 3 bis 5) auf, welches eine lösbare Verbindung des Tauchrohrs 3 mit dem Antriebselement 4 ermöglicht. Das Tauchrohr 3 und das Antriebselement 4 können beispielsweise mittels eines Bajonet-Verschlusses, einer Schraubverbindung, einer Steckverbindung oder anderen bekannten Verschlusselementen verbunden werden.

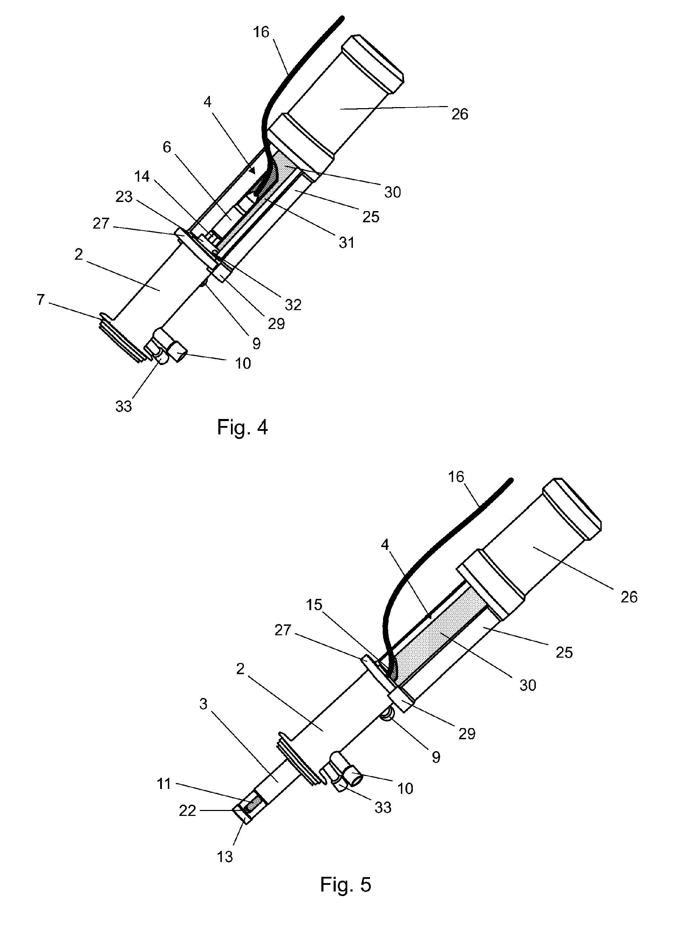

Das Antriebselement 4 ist vorzugsweise als Hülse gestaltet, welche im dem Messmedium zugewandten Bereich teilweise offen, beispielsweise in Form einer Halbschale oder eines Hülsensegments ausgestaltet ist (s. a. Figur 3 und 4), so dass das Antriebselement 4 den Sensorkopf 6 aufnehmen kann. Der Übergang zwischen der geschlossenen und der offenen Hülse ist vorzugsweise angeschrägt, so dass das Antriebselement 4 gleichzeitig als Führung für ein am Sensorkopf 6 befestigtes Kabel 16 dient. Das Kabel 16 ist mit einer hier nicht dargestellten Auswerte- und/oder Steuereinheit bzw. einer Leitstelle verbunden und kann wenn nötig zusätzlich noch aussen am hier nicht dargestellten Antriebsgehäuse befestigt werden.

Zur Abdichtung der verschiedenen Teile der Wechselarmatur gegen das Messmedium bzw. gegen die Umgebung weist die Wechselarmatur mehrere Dichtungen auf. Mindestens eine erste Dichtung 18 ist am bezogen auf Figur 1 oberen Ende des Tauchrohrs 3 an dessen Aussenseite angeordnet. Eine zweite Dichtung 19 ist im verengten Bereich des Gehäuses 2 an einem Absatz 8 angeordnet. Mit diesen beiden Dichtungen 18, 19 wird die Behandlungskammer sowohl in der Mess- als auch in der Ruheposition gegen das Messmedium bzw. gegen die Umgebung abgedichtet.

Weitere Dichtungen befinden sich im Inneren des Tauchrohrs 3 zwischen dem Tauchrohr 3 und dem Sensor 5. Eine dritte Dichtung 20 befindet sich am vom Messmedium abgewandten Ende des Tauchrohrs 3 etwas - bezogen auf Figur 1 - oberhalb der Dichtung 18 und eine vierte Dichtung 21 oberhalb des zum Messmedium hin offenen Bereichs 22. Die dritte und vierte Dichtung 20, 21 dichten das Innere des Tauchrohrs 3 sowie den Sensorkopf 6 gegen eindringende Medien ab und dienen auch dem Halt des Sensors 5 im Tauchrohr 3.

Die Dichtungen 18 bis 21 sind vorzugsweise O-Ringe aus einem chemikalienresistenten, sterilisierbaren Material.

In der in Figur 1 gezeigten Messposition befindet sich ein grosser Teil des Tauchrohrs 3, sowie das sensitive Element 11 in Kontakt mit dem Messmedium. Das Tauchrohr 3 ist in ein Messmedium eingefahren bzw. die Messsonde ist ausgefahren. Der Sensorkopf 6 sowie der ihn umgebende Teil des Antriebselements 4 befinden sich innerhalb der Behandlungskammer 1.

Die Anschlussstutzen 9, 10 für die Behandlungskammer 1 sind derart am bzw. im Gehäuse 2 angeordnet, dass ihre zur Behandlungskammer 1 gerichteten Öffnungen in der Messposition vom Tauchrohr 3 bzw. dem Antriebselement 4 abgedichtet und verschlossen werden, so dass neben einem beispielsweise in den Zuführungen befindlichen Absperrventil eine mechanische Barriere als Schutz gegen versehentlich eintretende Behandlungsmedien besteht. Die Behandlungskammer 1 ist in der Messposition gegen die Umgebung geöffnet und die Dichtungen 18, 19 dichten die Wechselarmatur mediumsdicht ab.

In der in Figur 2 gezeigten Ruheposition befindet sich das Tauchrohr 3 und der darin angeordnete Sensor 5 in der Behandlungskammer 1. Der zwischen der Dichtung 18 und dem Zapfen 13 liegende Teil des Tauchrohrs 3 weist einen geringeren Durchmesser auf als das Innere der Behandlungskammer 1, so dass fast alle während einer Messung mit dem Messmedium in Kontakt stehenden Bereiche der Wechselarmatur in der Behandlungskammer 1 behandelt werden können. Die Öffnungen der Anschlussstutzen 9, 10 zur Behandlungskammer 1 hin sind nicht mehr blockiert. Eingeleitete Behandlungsmedien wie Flüssigkeiten und/oder Gase zur Kalibrierung und/oder Reinigung können das Tauchrohr 3 sowie das im offenen Bereich 22 angeordnete sensitiven Element 11 umspülen. Einzig der Boden des Zapfens 13 befindet sich noch in Kontakt mit dem Messmedium und kann durch Verfahren, mit denen auch das das Messmedium aufweisende Behältnis gereinigt wird, behandelt werden.

Ein Wechsel von der Messposition (s. Figur 1) in die Ruheposition (s. Figur 2) bedingt, dass das Antriebselement 4, das Tauchrohr 3 sowie die im Tauchrohr 3 angeordnete Messsonde in Richtung des Antriebsgehäuses, bezogen auf die Figuren 1 und 2 nach oben, bewegt werden. Dies hat zur Folge, dass sich in der Ruheposition der Sensorkopf 6 sowie das Antriebselement 4 im Gehäuseaufsatz befinden.

In der Ruheposition (s. Figur 2) dichtet die zweite Dichtung 19, welche im Gehäuse 2 an der durch den Absatz 8 gebildeten Verengung angeordnet ist, die Behandlungskammer 1 gegen das Messmedium ab, so dass weder Behandlungsmedien aus der Behandlungskammer 1 in das Messmedium gelangen können noch umgekehrt. Die Dichtung 18 befindet sich nun zwischen den vom Medium abgewandten Enden des Tauchrohrs 3 und der Behandlungskammer 1 und dichtet die Behandlungskammer 1 gegen die Umgebung ab.

Das in den Figuren 1 und 2 gezeigte bevorzugte Ausführungsbeispiel weist ein weiteres Sicherheitsmerkmal in Form eines Absatzes 8 auf, welcher im dem Messmedium zugewandten Bereich des Gehäuses 2 angeordnet ist. Der Absatz 8 verengt das Gehäuse 2 an dieser Stelle und stellt gleichzeitig ein Ende der Behandlungskammer 1 dar. Der Absatz 8 dient als Anschlag für das Tauchrohr 3 und befindet sich bezogen auf die Zeichnung oberhalb des Flansches 7.

Im Gehäuse 2 ist das Tauchrohr 3 axial verschiebbar angeordnet. Das Tauchrohr 3 ist derart ausgeformt, dass es die Behandlungskammer 1 sowohl zum Messmedium als auch zur Umgebung hin abdichten kann (s. a. Figur 2). Der in der Messposition mit dem Messmedium in Kontakt tretende Teil des Tauchrohrs 3 weist daher einen kleineren Aussendurchmesser auf als der in der Messposition im Gehäuse 2 verbleibende Teil, so dass der dem Messmedium zugewandte Teil des Tauchrohrs 3 durch die Verengung des Gehäuses 2 geführt werden kann.

Die Tauchrohrbereiche mit unterschiedlichen Aussendurchmessern weisen als Übergang einen Absatz 12 auf, welcher in der Messposition an den nach innen gerichteten Absatz 8 der Behandlungskammer 1 anschlägt und somit das Tauchrohr 3 in der Messposition im Gehäuse 2 fixiert.

In der Ruheposition kann die Messsonde entweder mit durch die Behandlungskammer 1 geleiteten Behandlungsmedien behandelt werden oder nach Lösen der Anschlussbuchse 14, Abkopplung und Verschiebung des Antriebselements 4 relativ zum Gehäuse 2 aus der Wechselarmatur entfernt werden, wenn die Zuführungen zur Behandlungskammer 1 gesperrt sind und diese leer ist (s. Figuren 3 und 4). Damit eine Behandlung in der Behandlungskammer 1 nur bei Vorhandensein einer Messsonde möglich ist, weist die Wechselarmatur mindestens ein Sicherheitselement auf, wie beispielsweise einen innen, im dem Messmedium abgewandten Bereich des Tauchrohrs angeordneten Kontaktstift (hier nicht zu sehen), welcher durch eine eingesetzte Messsonde betätigt wird und ein Signal an die Auswerte- und/oder Steuereinheit weiter leitet, welche dann die Zuführung zur Behandlungskammer 1 frei gibt.

Ein weiteres Ausführungsbeispiel einer Wechselarmatur für eine Messsonde ist in Figur 3 perspektivisch dargestellt. Die Wechselarmatur weist ein Gehäuse 2 mit einem daran angebrachten Sicherheitselement 24 und einem im Gehäuse 2 angeordneten Tauchrohr, von dem in dieser Darstellung nur das Verbindungselement 23 für die Verbindung zum Antriebselement 4 und der Anschluss 28 für eine hier nicht dargestellte Messsonde zu sehen ist, einen mit dem Gehäuse 2 lösbar verbundenen Gehäuseaufsatz 25 und ein gewinkelt ausgestaltetes Antriebsgehäuse 17 für einen Winkelantrieb auf. Zur besseren Übersicht ist der Gehäuseaufsatz 25 zumindest teilweise offen dargestellt.

Das Gehäuse 2, wie auch die Wechselarmatur, ist im wesentlich zylindrisch ausgeformt, wobei auch andere Ausgestaltungen realisiert werden können. Das Gehäuse 2 weist am dem Messmedium zugewandten Ende einen Flansch 7 auf und geht am dem Messmedium abgewandten Ende in ein über den Zylinder hervorstehendes, flaches scheibenförmiges Segment 27 über.

Im Inneren des Gehäuses 2 ist das Tauchrohr verschiebbar angeordnet. Das Gehäuse 2 ist in diesem Ausführungsbeispiel nicht als Behandlungskammer ausgestaltet und weist auch keine Anschlussstutzen für Behandlungsmedien auf. Das Gehäuse 2 dient vor allem als Führung und Halterung für das Tauchrohr, welches axial verschiebbar im Inneren des Gehäuses angeordnet ist. Die Dimensionen, Ausgestaltung und Funktion des Inneren des Gehäuses 2 entsprechen in Bezug auf die Anordnung des Tauchrohrs denen der in den Figuren 1 und 2 gezeigten Behandlungskammer.

Das Tauchrohr ist im Gehäuse 2 angeordnet und kann eine Messsonde und insbesondere den Sensor einer Messsonde aufnehmen. Zur Befestigung der Messsonde verfügt das Tauchrohr über einen Anschluss 28, welcher in der Ruheposition am dem Messmedium abgewandten Ende aus dem Gehäuse 2 herausragt. Der Anschluss 28 kann als beliebiger bekannter Anschluss für eine Messsonde ausgestaltet sein, welcher mit der in der Beschreibung der Figuren 1 und 2 erwähnten Anschlussbuchse der Messsonde koppelbar ist.

Das Gehäuse 2 ist lösbar mit einem Gehäuseaufsatz 25 verbunden, welcher vorzugsweise um eine nahe dem Aussenrand angeordnete, azentrische Achse verschwenkbar ist, entlang derer ein Mittel zur Verbinden des Gehäuses 2 mit dem Gehäuseaufsatz 25 verläuft. Das Mittel kann beispielsweise als Stift, Zapfen oder Stange ausgestaltet sein. Der Gehäuseaufsatz 25 und das Gehäuse 2 können auch vollständig von einander getrennt werden. Der Gehäuseaufsatz 25 dient dazu, das mit dem Antriebsgehäuse 17 verbundene Antriebselement 4 gegen äussere Einflüsse zu schützen, sowie als Verbindung zwischen dem Gehäuse 2 und dem Antriebsgehäuse 17. Vorzugsweise jedoch nicht zwingend ist der Gehäuseaufsatz 25 fest mit dem Antriebsgehäuse 17 verbunden und kann nur gemeinsam mit diesem bewegt werden.

Der Gehäuseaufsatz 25 weist an seinem dem Messmedium zugewandten Ende eine Nut 29 auf, welche passgenau die Aussenkante des Segments 27 umfassen kann. In Figur 3 ist die Wechselarmatur ohne Messsonde und mit einem zumindest teilweise geöffneten Gehäuseaufsatz 25 dargestellt. An der Aussenkante des Segments 27 ist ein elektronisches und/oder mechanisches Sicherheitselement 24 angeordnet, welches ein Einfahren des Tauchrohrs 3 bzw. einer darin angeordneten Messsonde in ein Messmedium verhindert, wenn der Gehäuseaufsatz 25 in Relation zum Gehäuse 2 verschwenkt oder geöffnet ist. Beim Schliessen kommt der Gehäuseaufsatz 25 mit dem Sicherheitselement 24 in Kontakt und löst eine Sperre, so dass das Tauchrohr 3 in ein Messmedium eingefahren werden kann. Das Sicherheitselement 24 kann beispielsweise als Taste oder Druckelement ausgestaltet sein, welches mit einem in eine Aussparung im Tauchrohr 3 eingreifenden Bolzen zusammenwirkt. Wenn das Sicherheitselement 24 durch den Gehäuseaufsatz 25 in das Gehäuse 2 gedrückt wird, löst sich der Bolzen aus der Aussparung im Tauchrohr 3 und das Tauchrohr 3 kann mittels des Antriebs bewegt werden. Wird der Gehäuseaufsatz 25 vom Gehäuse 2 gelöst, so wird der Bolzen wieder in die Aussparung eingebracht. Neben einer mechanischen Sperre kann das Sicherheitselement 24 ebenso wie weitere Sicherheitselemente beispielsweise auch elektrisch mit dem Antrieb und/oder einer Leitstelle bzw. einer Auswerte- und/oder Steuereinheit verbunden sein und im einfachsten Fall den Betriebszustand (An/Aus) des Antriebs steuern.

Das Antriebselement 4 ist im Wesentlichen eine mit dem Antriebsgehäuse 17 verbundene, längliche Hülse. Im dem Messmedium abgewandten Teil des Antriebselements 4 handelt es sich um eine geschlossene Hülse 30 und im dem Messmedium zugewandten Teil um ein zumindest teilweise offenes Hülsensegment 31, das zum Messmedium hin in einem Verbindungselement 32 endet, welches mit dem Verbindungselement 23 des Tauchrohrs zusammenwirken kann. Die restliche geschlossene Hülse 30 befindet sich in der Ruhestellung im Antrieb 26.

Wenn der Gehäuseaufsatz 25 geschlossen wird, greifen die Verbindungselemente 23 und 32 ineinander, so dass eine lösbare Verbindung zwischen dem Tauchrohr und dem Antriebselement 4 hergestellt wird. Die Verbindungselemente 23, 32 sind so ausgestaltet, dass sie beim Schliessen des Gehäuseaufsatzes 25 ineinander greifen und einrasten und sich beim Öffnen des Geräteaufsatzes 25 wieder leicht trennen. Ein weiteres Sicherheitselement wird beim korrekten Einrasten der Verbindungselemente 23, 32 ausgelöst, so dass ein Einfahren des Tauchrohrs in ein Messmedium nur möglich ist, wenn der Antrieb über das Antriebselement korrekt mit dem Tauchrohr verbunden ist. Ein Einfahren des Tauchrohrs wird verhindert, wenn dieses zwar mit dem Tauchrohr in Kontakt steht, die Verbindungselemente (23, 32) aber nicht eingerastet sind.

Das im Rahmen der Beschreibung der Figuren 1 und 2 beschriebene Sicherheitselement verhindert ein Einfahren des Tauchrohrs 3 ohne darin angeordnete Messsonde. Das Sicherheitselement 24 verhindert ein Einfahren des Tauchrohrs 3 bei geöffnetem Gehäuseaufsatz 25. Ein weiteres Sicherheitselement verhindert ein Einfahren des Tauchrohrs bei gelösten Verbindungsmitteln 32, 23. Bei einer Wechselarmatur mit allen drei Sicherheitselementen ist ein Einfahren des Tauchrohrs 3 in ein Messmedium nur dann möglich, wenn sich eine Messsonde in der Armatur befindet, der Gehäuseaufsatz 25 geschlossen und der Antrieb über das Antriebselement mit dem Tauchrohr verbunden ist (s. a. Figuren 4 und 5).

Ein weiteres Ausführungsbeispiel einer Wechselarmatur im Ruhezustand mit einer eingesetzten Messsonde, geschlossenem Gehäuseaufsatz 25 und einem Antriebsgehäuse 26 für einen geraden Antrieb und ein gerades Antriebsgehäuse 26 ist in Figur 4 perspektivisch dargestellt. Der Gehäuseaufsatz 25 ist wiederum zur Umgebung hin zumindest teilweise offen dargestellt.

Die Messsonde ist mittels der Anschlussbuchse 14 am Tauchrohr befestigt, welches sich in der Ruheposition im Gehäuse 2 befindet und in dieser Darstellung nicht zu sehen ist. Das Antriebselement 4 ist mittels der Verbindungselemente 23, 32 ebenfalls mit dem Tauchrohr verbunden und die Nut 29 des Gehäuseaufsatzes 25 umschliesst die Aussenkante des Segments 27. In der hier dargestellten Ruheposition befindet sich der Sensorkopf 6 innerhalb des Hülsensegments 31, welches im Gehäuseaufsatz 25 angeordnet ist. Das am Sensorkopf 6 befestigte Kabel 16 wird durch das Antriebselement 4, vor allem durch den Übergang 15 zwischen der Hülse 30 und dem Hülsensegment 31 aus der Wechselarmatur herausgeführt. Der Gehäuseaufsatz 25 weist hierfür eine geeignete Durchführung auf.

In diesem Ausführungsbeispiel weist das Gehäuse 2 drei Anschlussstutzen 9, 10, 33 als Ein- und Auslass für Behandlungsmedien in die im Gehäuse 2 angeordnete Behandlungskammer auf.

Figur 5 zeigt das in Figur 4 dargestellte Ausführungsbeispiel einer Wechselarmatur in der Messposition. Das Tauchrohr 3 wurde vom Antriebselement 4 bewegt und ragt nun aus dem Gehäuse 2 heraus beispielsweise in ein Messmedium hinein und kann mit diesem in Kontakt treten. Im Bereich des Gehäuseaufsatzes 25 ist hier hauptsächlich die geschlossene Hülse 30 des Antriebselements 4 zu sehen. Das Hülsensegment 31 befindet sich fast vollständig im Inneren des Gehäuses 2, so dass nur eine kleine Öffnung im Bereich des Gehäuseaufsatzes verbleibt, durch die das Kabel 16 nach aussen geleitet wird, wenn eine Messsonde mit Kabel verwendet wird.

Beim Einfahren in ein Messmedium werden das Tauchrohr 3, das Antriebselement 4 und die darin angeordnete Messsonde mittels des im Antriebsgehäuse 26 angeordneten Antriebs axial zum Messmedium hin verschoben.

Ein Ein- bzw. Ausbau der Messsonde ist nur in der Ruheposition bei geöffnetem Gehäuseaufsatz 25 möglich, da in der Messposition der geschlossene Bereich 30 des Antriebselements 4 den Zugang zum Tauchrohr und damit zur Messsonde blockiert. Wird die Messsonde in der Behandlungskammer behandelt, so verhindert vor allem der im Wesentlichen geschlossene Gehäuseaufsatz 25 einen Ausbau der Messsonde.

Zur besseren Übersicht wird der Gehäuseaufsatz 25 in den Figuren 3 bis 5 immer teilweise der Umgebung gegenüber geöffnet dargestellt. Im Betrieb ist es vorteilhaft, wenn der Gehäuseaufsatz im Wesentlichen geschlossen ist, so dass weder Flüssigkeiten noch Stäube durch den Gehäuseaufsatz in die Wechselarmatur eindringen können. Ein geschlossener Gehäuseaufsatz kann durch Verschliessen der zum Austausch einer Messsonde notwendigen Öffnung mittels beispielsweise einer separaten Kappe, eines verschiebbaren Verschlusselements oder eines flexiblen Balgs realisiert werden, wobei das Verschlusselement eine Durchführung für ein Kabel aufweisen kann.

Die erfindungsgemässe Wechselarmatur kann sowohl mit als auch ohne Behandlungskammer realisiert werden, wobei eine Variante mit Behandlungskammer bevorzugt wird.

Die Eintauchtiefe der Messsonde kann durch den Hub der Wechselarmatur, also die Verschiebungsstrecke des Tauchrohrs im Gehäuse, verändert werden. Die maximale Eintauchtiefe wird jedoch durch die Länge der verwendeten Messsonde und insbesondere der Länge des verwendeten Sensors festgelegt.

In Abhängigkeit der Länge der verwendeten Messsonde sollte zumindest die Länge des Tauchrohrs angepasst werden. Weitere Anpassungen an unterschiedliche Sondenlängen können über eine Veränderung der Länge des Gehäuses und/oder des Gehäuseaufsatzes erfolgen. Weist die Wechselarmatur eine Behandlungskammer auf, so wird eine Anpassung des Gehäuseaufsatzes bevorzugt, da das Tauchrohr von aussen bereits beim Durchziehen durch die Behandlungskammer gereinigt werden kann und vor allem das sensitive Element während einer Behandlung innerhalb der Behandlungskammer angeordnet sein muss. Weiterhin wäre es denkbar ist, bei der Verwendung von besonders langen Sensoren einen grösseren Teil der Wechselarmatur im Inneren des Behältnisses, welches das Messmedium aufweist, anzuordnen. Die Wechselarmatur kann somit je nach Ausgestaltung mit allen handelsüblichen Sensorlängen betrieben werden.

Die Ausgestaltung des Tauchrohrs 3 und die Anordnung des offenen Bereichs 22 an dessen dem Medium zugewandten Ende stellt eine bevorzugte Ausgestaltung des Tauchrohrs dar, welche vor allem für Messsonden und Sensoren mit endständigem sensitiven Element bevorzugt wird. Das Tauchrohr kann ebenso einen oder mehrere Durchbrüche an anderen Stellen aufweisen, so dass auch Messsonden mit Sensoren deren sensitiven Elemente nicht endständig angeordnet sind in die Wechselarmatur eingesetzt und zur Bestimmung von unterschiedlichen Parametern des Messmediums eingesetzt werden können.

Das Gehäuse 2 kann wie in den Figuren 1 und 2 gezeigt einen als Anschlag dienenden Absatz 8 aufweisen. Dieser Anschlag dient dazu, ein zu tiefes Eintauchen des Tauchrohrs in das Behältnis, an welches die Wechselarmatur angeschlossen ist, zu vermeiden. Das Gehäuse 2 kann auch ohne diese Absatz 8 ausgestaltet sein. In diesem Fall kann die Dichtung 19 in einer im Gehäuseinneren ausgestalteten Nut angeordnet und das Tauchrohr 3 mit einem gleichmässigen Aussendurchmesser ausgestaltet sein.

Das Antriebselement wurde in den gezeigten Ausführungsbeispielen als teilweise offene Hülse dargestellt. Weitere Möglichkeiten der Ausgestaltung umfassen einzelne Stäbe, sowie Hülsensegmente mit verschiedenen grossen Öffnungen oder auch eine vollständig geschlossene Hülse, wenn eine kabellose Messsonde verwendet wird.

Das Antriebselement und der Gehäuseaufsatz bewirken, dass der Antrieb und das Gehäuse Wärme entkoppelt sind, so dass eine Wärmeentwicklung im Antrieb keinen Einfluss auf eine im Gehäuse im Tauchrohr angeordnete Messsonde hat.

### Bezugszeichenliste

- 1: Behandlungskammer
- 2: Gehäuse
- 3: Tauchrohr
- 4: Antriebselement
- 5: Sensor
- 6: Sensorkopf
- 7: Flansch
- 8: Absatz
- 9: Anschlussstutzen
- 10: Anschlussstutzen
- 11: Sensitives Element
- 12: Absatz
- 13: Zapfen
- 14: Anschlussbuchse
- 15: Kabelführung
- 16: Kabel
- 17: Gewinkeltes Antriebsgehäuse
- 18: 1. Dichtung
- 19: 2. Dichtung
- 20: 3. Dichtung
- 21: 4. Dichtung
- 22: Offener Bereich
- 23: Verbindungselement
- 24: Sicherheitselement
- 25: Gehäuseaufsatz
- 26: Antriebsgehäuse
- 27: Segment
- 28: Anschluss
- 29: Nut
- 30: Hülse
- 31: Hülsensegment
- 32: Verbindungselement
- 33: Anschlussstutzen

## Patentansprüche

1. Wechselarmatur mit einem Gehäuse (2), einem im Gehäuse (2) zwischen einer Ruheposition und einer Messposition axial verschiebbaren Tauchrohr (3), einer herausnehmbar im Tauchrohr (3) anordnenbaren Messsonde, und einem in einem Antriebsgehäuse (17, 26) angeordneten Antrieb, welcher ein mit dem Tauchrohr (3) koppelbares Antriebselement (4) aufweist, **dadurch gekennzeichnet, dass** sich das Tauchrohr (3) und/oder eine gegebenenfalls im Tauchrohr (3) angeordnete Messsonde stets ausserhalb des Antriebsgehäuses (17, 26) befinden.

2. Wechselarmatur nach Anspruch 1, **dadurch gekennzeichnet, dass** das Antriebsgehäuse (17, 26) frei von Durchführungen für Leitungen von und/oder zur Messsonde ist.

3. Wechselarmatur nach einem der Ansprüche 1 oder 2, **dadurch gekennzeichnet, dass** ein Gehäuseaufsatz (25) zwischen dem Gehäuse (2) und dem Antriebsgehäuse (17, 26) angeordnet ist, wobei der Gehäuseaufsatz (25) das Antriebselement (4) aufnimmt und lösbar mit dem Gehäuse (2) verbunden ist.

4. Wechselarmatur nach einem der Ansprüche 1 bis 3, **dadurch gekennzeichnet, dass** im Gehäuse (2) eine Behandlungskammer (1) für die im Tauchrohr (3) anordnenbare Messsonde angeordnet ist.

5. Wechselarmatur nach Anspruch 4, **dadurch gekennzeichnet, dass** die Behandlungskammer (1) mindestens einen Anschlussstutzen (9, 10, 33) zur Zuführung und/oder Ableitung mindestens eines Behandlungsmediums aufweist.

6. Wechselarmatur nach einem der Ansprüche 1 bis 5, **dadurch gekennzeichnet, dass** die Wechselarmatur mindestens ein Sicherheitselement aufweist, welches eine axiale Verschiebung des Tauchrohrs (3) ohne eine im Tauchrohr (3) angeordnete Messsonde und/oder ohne Verbindung zwischen dem Tauchrohr (3) und dem Antriebselement (4) und/oder bei geöffnetem Gehäuseaufsatz (25) verhindert.

7. Wechselarmatur nach einem der Ansprüche 4 oder 5, **dadurch gekennzeichnet, dass** die Wechselarmatur mindestens ein Sicherheitselement aufweist, welches die Zufuhr des mindestens einen Behandlungsmittels zur Behandlungskammer (1) kontrolliert.

8. Wechselarmatur nach einem der Ansprüche 6 oder 7, **dadurch gekennzeichnet dass** das mindestens eine Sicherheitselement ein mechanisches und/oder elektronisches Sperrelement ist.

9. Wechselarmatur nach einem der Ansprüche 6 oder 7, **dadurch gekennzeichnet dass** das mindestens eine Sicherheitselement ein elektronischer Sensor ist, welcher ein Signal an eine mit der Wechselarmatur und/oder der Messsonde verbundenen Auswerte- und/oder Steuereinheit und/oder Leitstelle sendet.

10. Wechselarmatur nach einem der Ansprüche 1 bis 9, **dadurch gekennzeichnet dass** die Messsonde einen Sensor (5) und einen Sensorkopf (6) aufweist, wobei die Messsonde so in der Wechselarmatur anordnenbar ist, dass sich der Sensor (5) im Tauchrohr (3) und der Sensorkopf (6) im Antriebselement (4) befindet.

11. Wechselarmatur nach einem der Ansprüche 1 bis 10, **dadurch gekennzeichnet dass** die Messsonde nur in der Ruheposition bei geöffnetem Gehäuseaufsatz (25) und vom Tauchrohr (3) getrennten Antriebselement (4) aus der Wechselarmatur entfernbar ist.

12. Wechselarmatur nach einem der Ansprüche 1 bis 11, **dadurch gekennzeichnet, dass** das Tauchrohr (3) und/oder das Gehäuse (2) mindestens eine Dichtung (18, 19, 20, 21) aufweisen, welche die Behandlungskammer (1) in der Messposition gegen das Messmedium hin und/oder in der Ruheposition sowohl gegen das Messmedium als auch gegen die Umgebung hin abdichten.

13. Wechselarmatur nach einem der Ansprüche 1 bis 12, **dadurch gekennzeichnet, dass** der pneumatisch oder elektrisch ausgestaltete Antrieb gerade oder gewinkelt ausgebildet ist.
